(19) Europäisches Patentamt
European Patent Office
Office européen des brevets

(11) **EP 3 727 796 B1**

(12) **EUROPÄISCHE PATENTSCHRIFT**

(45) Veröffentlichungstag und Bekanntmachung des Hinweises auf die Patenterteilung:
**11.01.2023 Patentblatt 2023/02**

(21) Anmeldenummer: **18815649.1**

(22) Anmeldetag: **06.12.2018**

(51) Internationale Patentklassifikation (IPC):
**B29C 49/78** (2006.01)    **B29C 49/46** (2006.01)

(52) Gemeinsame Patentklassifikation (CPC):
**B29C 49/783; B29C 49/46;** B29C 49/78;
B29C 2049/4664

(86) Internationale Anmeldenummer:
**PCT/EP2018/083756**

(87) Internationale Veröffentlichungsnummer:
**WO 2019/121034 (27.06.2019 Gazette 2019/26)**

(54) **VERFAHREN UND VORRICHTUNG ZUM EXPANDIEREN VON BEHÄLTNISSEN MIT BESTIMMUNG DES GASANTEILS**

METHOD AND DEVICE FOR EXPANDING CONTAINERS WITH DETERMINATION OF GAS PORTION

PROCÉDÉ ET DISPOSITIF POUR RÉALISER L'EXPANSION DE RÉCIPIENTS AVEC DÉTERMINATION DE LA PROPORTION DE GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2017 DE 102017130986**

(43) Veröffentlichungstag der Anmeldung:
**28.10.2020 Patentblatt 2020/44**

(73) Patentinhaber: **Krones AG**
**93073 Neutraubling (DE)**

(72) Erfinder: **VORNEHM, Andreas**
**93073 Neutraubling (DE)**

(74) Vertreter: **Bittner, Bernhard**
**Hannke Bittner & Partner**
**Patent- und Rechtsanwälte mbB**
**Prüfeninger Strasse 1**
**93049 Regensburg (DE)**

(56) Entgegenhaltungen:
**DE-A1-102011 012 751    US-A1- 2011 135 778**
**US-A1- 2016 144 550**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf eine Vorrichtung und ein Verfahren zum Herstellen von Behältnissen und insbesondere zum Herstellen von Getränkebehältnissen. Derartige Vorrichtungen und Verfahren sind aus dem Stand der Technik seit langem bekannt. Dabei ist es bisher bekannt, zunächst Kunststoffvorformlinge beispielsweise mittels Blasformmaschinen zu Kunststoffflaschen zu expandieren und diese anschließend zu befüllen. Bei einem aus dem jüngeren Stand der Technik bekannt gewordenen Verfahren wird nunmehr vorgeschlagen, Kunststoffflaschen im selben Arbeitsschritt zu formen und zu befüllen. Das heißt, die Umformung des Kunststoffvorformlings findet insbesondere durch das zu befüllende Produkt statt. Die Druckschriften US 2016/144550 A1 und US 2011/135778 A1 beschreiben ein Verfahren zum Befüllen und Expandieren von Behältnissen.

Dabei ist es im Allgemeinen nicht auszuschließen, dass im Rahmen des Form- und Füllprozesses Luft in die Form- und Fülleinrichtung gelangt. Zum einen steigt die in dem Kunststoffvorformling sowie in dem Bereich zwischen Kunststoffvorformling und der Fülleinheit befindliche Luft während und nach der Ausformung des Kunststoffvorformlings nach oben und gegebenenfalls auch in die Form- und Fülleinrichtung. Zum anderen ist es möglich, dass bei der Aufladung der Form- und Fülleinheit mit dem Produkt Luft über die Zuleitung in die Form- und Fülleinheit gerät. Derartige (parasitäre) Luftvolumina können in Wechselwirkung mit dem Produkt treten und sich negativ auf die Produktqualität auswirken. Außerdem wird das nutzbare Volumen der Form- und Fülleinheit reduziert. Mit dem Anteil an Luft im System nimmt außerdem der Energieverbrauch zu, da bei der Druckerzeugung diese parasitäre Luft komprimiert werden muss und ein Großteil der dafür benötigten Energie auch irreversibel in Wärme umgewandelt wird.

Im Rahmen des hier vorgeschlagenen Form- und Füllprozesses wäre es deshalb von Vorteil, geeignet auf die entsprechende Luftmenge reagieren zu können.

Der vorliegenden Erfindung liegt daher die Aufgabe zugrunde, ein Verfahren zum Umformen und Befüllen von Kunststoffvorformlingen vorzustellen, welches insbesondere eine Möglichkeit bietet, Störfaktoren bedingt durch Luft im System zu verringern. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Befüllen und Expandieren von Behältnissen und insbesondere Kunststoffbehältnissen wird zunächst ein expandierbares Behältnis und insbesondere ein Kunststoffvorformling zur Verfügung gestellt. Dieser Kunststoffvorformling wird mit einem flüssigen Füllgut befüllt, wobei der Kunststoffvorformling wenigstens zeitweise während dieses Befüllens expandiert wird und wobei das Befüllen mittels einer Fülleinrichtung durchgeführt wird, welche an eine Mündung des zu befüllenden und expandierenden Behältnisses bzw. Kunststoffvorformlings angelegt wird.

Erfindungsgemäß wird wenigstens zeitweise ein Messwert gemessen, der für einen in der Fülleinrichtung befindlichen Gasanteil charakteristisch ist.

Bevorzugt wird ein Bestandteil der Fülleinrichtung und insbesondere eine sog. Fülldüse an den Mündungsrand des Kunststoffvorformlings angelegt, um diesen zu befüllen. Besonders bevorzugt wird dieser Bestandteil dabei dichtend an diesen Mündungsrand angelegt.

Insbesondere wird ein Gasanteil bestimmt, der in einem derjenigen Leitungswege vorhanden ist, welche ausgehend von einem Reservoir für die Flüssigkeit zu dem Kunststoffvorformling gelangen. Es wird daher insbesondere vorgeschlagen, im Rahmen eines Form- und Füllprozesses die in dem System bzw. in der Fülleinrichtung enthaltene Gas- und insbesondere Luftmenge bestimmen zu können. Damit handelt es sich bevorzugt um einen Gasanteil, besonders bevorzugt einen Luftanteil in dem abzufüllenden Produkt.

Unter der Fülleinrichtung wird dabei insbesondere die gesamte Fülleinrichtung verstanden, also genauer die Füll- und Umformungseinrichtung, welche das Befüllen und Umformen vornimmt. Zu dieser Fülleinrichtung zählt dabei bevorzugt auch eine Druckbeaufschlagungseinrichtung, welche das flüssige Medium unter Druck bereitstellt. Es wäre auch denkbar, an bzw. in dieser Druckbeaufschlagungseinrichtung den Gasanteil zu bestimmen. Daneben könnte der Gasanteil auch in einer Verbindungsleitung bestimmt werden, welche dazu dient, um das flüssige Medium von der Druckbeaufschlagungseinrichtung zu der Fülleinheit zu fördern.

Bei einem bevorzugten Verfahren wird die Fülleinrichtung und insbesondere eine Druckerzeugungseinrichtung dieser Fülleinrichtung unter Verwendung des Messwerts gesteuert und/oder geregelt. Dabei kann beispielsweise auf Basis dieses Messwertes eine Druckerzeugungseinrichtung, bevorzugt eine Kolbeneinrichtung bewegt, gesteuert und bevorzugt geregelt werden.

So wäre es beispielsweise möglich, auf Basis dieser Information etwa einen Entlüftungsvorgang einzuleiten oder Prozessparameter geeignet anzupassen. Bei einer bevorzugten Ausführungsform wird das abzufüllende Füllgut insbesondere mittels einer Druckbeaufschlagungseinrichtung zur Verfügung gestellt und insbesondere einem Füllkopf zugeführt. Die hier beschriebene Luftmenge bzw. der Luftanteil kann dabei beispielsweise sowohl in dem Füllkopf auftreten als auch in der erwähnten Druckbeaufschlagungseinrichtung.

Damit betrifft die vorliegende Erfindung genauer die Idee, die in der Form- und Fülleinheit enthaltende Luftmenge zu bestimmen, was, wie unten genauer beschrieben, beispielsweise über eine Kompressibilität des Systemvolumens erfolgen kann.

Vorteilhaft wird der besagte Messwert in einem wenigstens teilweise und bevorzugt im Wesentlichen abgeschlossenen Volumenbereich der Fülleinrichtung bestimmt. Dabei kann es sich beispielsweise um einen Volumenabschnitt über dem Anlagebereich der Fülleinrichtung handeln. Insbesondere wird dabei dieser Volumenabschnitt durch im Wesentlichen starre Wandungen begrenzt so dass das in diesem Volumen befindliche Füllgut definiert komprimiert werden kann.

Generell ist die Kompressibilität eines Mediums ein Maß für die Komprimierbarkeit dieses Mediums und beschreibt, wie sich eine Volumenänderung auf den Druck im Medium auswirkt. Die meisten Flüssigkeiten insbesondere zu befüllende Produkte weisen eine sehr geringe Kompressibilität auf, wohingegen Luft und andere Gase oder Gasgemische üblicherweise relativ große Kompressibilitäten aufweisen. Dieser Umstand kann wie unten genauer beschrieben wird, verwendet werden, um auf den Luftanteil im System zu schließen.

Dabei ist es möglich, dass dieser Volumenabschnitt beispielsweise durch Schließen von Ventilen abgeschlossen wird und insbesondere einseitig eine Kompression durchgeführt wird. Auf diese Weise kann eine durch diese Kompression bewirkte Volumenänderung erfasst werden.

Bei einer bevorzugten Ausführungsform ist der Messwert ein Druckwert oder ein Messwert, der für einen Druckwert charakteristisch ist. Dabei ist es beispielsweise möglich, dass der Druck oder die Druckänderung des zu komprimierenden Mediums bestimmt wird. Dies kann beispielsweise direkt über ein Druckmessgerät erfolgen, welches einen Druck des zu untersuchenden Volumens misst und insbesondere auch kontinuierlich misst. Daneben kann es sich jedoch auch um einen Messwert handeln, über den auf einen Druckwert rückgeschlossen werden kann, etwa ein Antriebsmoment, das aufgebracht wird, um beispielsweise einen entsprechenden Kolben, der den Druck erzeugt, zu bewegen.

Bei einem bevorzugten Verfahren ist der Messwert ein für eine Kompressibilität eines Mediums charakteristischer Wert und/oder aus dem Messwert wird ein für die Kompressibilität des Mediums charakteristischer Wert bestimmt.

In dem hier beschriebenen System der Form- und Fülleinheit ist das eingeschlossene Volumen zumindest in Teilbereichen des Prozessablaufs eindeutig bestimmbar, beispielsweise da eine Kolbenposition einer Druckbeaufschlagungseinrichtung bekannt ist. Wird nun eine Kolbeneinrichtung bewegt, so führt dies zu einer Volumenänderung dV. Auch entsteht eine Druckänderung dp, die beispielsweise durch einen Drucksensor gemessen werden kann.

Aus diesen Daten kann ein Luftvolumen des Mediums bzw. ein Luftanteil bestimmt werden.

Generell kann das Luftvolumen $V_1$ auf Basis der nachfolgenden Zusammenhänge bestimmt werden:

$$k_i = -\frac{1}{V_i} \cdot \frac{dv_i}{dp_i}$$

($\kappa$: Kompressibilität)

$$V_{ges} = V_1 + V_2$$

$$dv_{ges} = dv_1 + dv_2$$

$$dp_{ges} = dp_1 = dp_2$$

$$\rightarrow \quad V_1 = \frac{K_2 - K_{ges}}{K_2 - K_1} \cdot V_{ges}$$

Wie erwähnt, ist es neben der Druckmessung mittels eines Drucksensors möglich, den im Volumen herrschenden Druck aus den Drehmomenten des Servoantriebs zu ermitteln. Dabei misst bevorzugt eine Motorsteuerung im Rahmen der Antriebsregelung den Motorstrom, woraus wiederum das aktuelle Drehmoment berechnet werden kann. Aus diesem Wert kann die Kolbenkraft bestimmt werden, die wiederum proportional zu dem in einem Druckzylinder herrschenden Druck ist.

Daneben wäre es auch möglich, für die Messung und Berechnung des Luftvolumens das Kompressionsmodul K heranzuziehen, welches als Kehrwert der Kompressibilität definiert ist K = 1/$\kappa$. Daneben wäre es auch möglich, umgekehrt das Produktvolumen zu bestimmen und anschließend aus der Differenz zu dem Gesamtvolumen das Gas- bzw. Luftvolumen zu berechnen.

Bei einem weiteren bevorzugten Verfahren wird das Behältnis entlang eines vorgegebenen Transportpfads transportiert und wenigstens zeitweise während dieses Transports expandiert und befüllt. Dies bedeutet insbesondere, dass die Behältnisse während des gesamten Füll- und Expansionsverfahrens transportiert werden und besonders bevorzugt kontinuierlich transportiert werden. Vorteilhaft werden die Behältnisse entlang eines kreisförmigen Transportpfades transportiert.

Bei einer weiteren vorteilhaften Ausführungsform wird das flüssige Medium mittels einer Druckerzeugungseinrichtung dem Behältnis zugeführt. Dabei ist es möglich, dass die diese Druckerzeugungseinrichtung einen Kolben aufweist, der bezüglich eines Flüssigkeitsraums und insbesondere eines mit dem Produkt gefüllten Raumes bewegt wird. Wie erwähnt, ist die Druckerzeugungseinrichtung ebenfalls ein Bestandteil der Fülleinrichtung.

Vorteilhaft weist auch der oben erwähnte Füllkopf einen Füllraum auf, der von der Druckerzeugungseinrichtung gespeist wird. Dabei ist es sowohl möglich, einen Druck- bzw. eine Druckdifferenz im Bereich des Füllkopfes zu messen als auch im Bereich der erwähnten Druckerzeugungseinrichtung.

Bei einem weiteren bevorzugten Verfahren wird die Druckerzeugungseinrichtung unter Verwendung des oben beschriebenen Messwertes gesteuert. Bevorzugt ist es dabei möglich, dass die Druckerzeugungsreinrichtung auch unter Verwendung eines so ermittelten Gasanteils innerhalb des Füllmediums gesteuert wird.

Allgemein kann die Information über die im System enthaltene Luftmenge auf unterschiedliche Weise genutzt werden. So ist es möglich, die Luftmenge als Indikator zu verwenden, ob ein Entlüftungszyklus eingeleitet werden soll oder ob eine Entlüftung des Systems gesteuert werden soll.

Daneben kann diese Luftmenge auch zur Optimierung des Form- und Füllprozesses dienen. Ist mehr Luft im System, kann beispielsweise die Trajektorie eines Kolbens angepasst werden, sodass sich der für den Form- und Füllprozess optimale Druckverlauf ergibt.

Daneben kann auch eine Füllmengen-Korrektur eines Füllzylinders vorgenommen werden. Eine Luftmenge muss beim Aufladen des Zylinders vorgehalten werden, damit die passende Menge an Produkt in das Behältnis gelangt.

Bevorzugt erfolgen die hier beschriebenen Messungen zur Bestimmung des Gas-Anteils innerhalb des Prozessablaufs und bevorzugt auch innerhalb eines Arbeitsbetriebs der Vorrichtung.

Bei der Durchführung der Messung ist darauf hin zu weisen, dass unterschiedliche Kompressibilitäten der Medien vorausgesetzt werden. Je größer der Unterschied, desto leichter ist eine Messung möglich. So unterscheiden sich beispielsweise die Kompressibilitäten von Wasser und Luft um den Faktor 20000. Wie oben erwähnt, wird bevorzugt während der Messung das System und/oder ein bestimmter Volumenanteil der Fülleinrichtung möglichst steif verschlossen. Sollten beispielsweise Membranen das abgeschlossene Medium begrenzen, wäre vorteilhaft dafür zu sorgen, dass zumindest während der Messung eine Verfälschung durch diese Membranen nicht auftritt oder diese bei der Messung berücksichtigt werden.

Besonders bevorzugt wird der Messwert durch einen Drucksensor oder eine Druckmessung in dem Füllzylinder und/oder in dem Füllkopf verwendet. Bevorzugt wird während der Messung auch ein Verfahrweg etwa einer Kolbeneinrichtung berücksichtigt bzw. bestimmt. Dieser dient mittelbar zur Bestimmung eines sich durch die Veränderung ebenfalls verändernden Volumens.

Bevorzugt wird wenigstens zeitweise eine Druckdifferenz bestimmt. So können beispielsweise unterschiedliche Drücke bei unterschiedlichen Volumina bestimmt werden. Bevorzugt werden wenigstens zwei Druckwerte und auch bevorzugt wenigstens zwei Volumenwerte bestimmt. Aus diesem kann die Kompressibilität berechnet werden.

Bei einem weiteren bevorzugten Verfahren wird ein Volumen der abzufüllenden Flüssigkeit innerhalb eines vorgegebenen Raumabschnittes bestimmt. Dieser Raumabschnitt wird, wie oben erwähnt, bevorzugt durch möglichst starre Wandungen und dergleichen begrenzt.

Bei einem weiteren bevorzugten Verfahren wird eine Referenzmessung durchgeführt, insbesondere in einem definierten Volumenabschnitt und/oder anhand eines definierten und/oder bekannten Mediums. So ist es beispielsweise denkbar, dass zur Verbesserung der Messgenauigkeit eine Initialmessung in einem vollentlüfteten Zustand durchgeführt wird. Die Ergebnisse daraus können beispielsweise auch für nachfolgende Messungen berücksichtigt werden.

Bei einem weiteren bevorzugten Verfahren wird wenigstens zeitweise eine Entlüftung der Fülleinrichtung vorgenommen. Dabei ist es möglich, dass diese Entlüftung in Reaktion auf einen etwa zu hohen gemessenen Gasanteil durchgeführt wird.

Bei einem weiteren bevorzugten Verfahren wird eine Vielzahl von Messwerten aufgenommen. Besonders bevorzugt wird eine Kennlinie aufgenommen und insbesondere eine Druck/Verfahrweg-Kennlinie, wobei sich der Verfahrweg insbesondere auf die Kolbeneinrichtung bezieht.

Bevorzugt wird diese Kennlinie mit einer Referenzkurve und/oder Referenzkennlinie verglichen. Auf diese Weise kann ermittelt werden, ob und gegebenenfalls auch wieviel (komprimierte/s) Luft bzw. Gas in dem System ist. Wenn der Luftanteil oder der kompressible Anteil zu hoch ist, kann beispielsweise ein Spülvorgang eingeleitet werden. Daneben wäre es auch möglich, dass bei Feststellung eines zu hohen Gasanteils ein ursprünglich vorgegebener Verfahrweg eines Kolbens verlängert wird, um den durch die Luftkompression "verbrauchten" Verfahrweg wieder zu kompensieren. Weiterhin ist es auch möglich, dass ein Vergleich eines gemessenen Messwerts mit einem Referenzwert durchgeführt wird. In Abhängigkeit von einem gemessenen Druck kann beispielsweise gespült werden oder auch ein Verfahrweg eingestellt werden. Daneben ist auch eine zentrale Druckerzeugung oder eine Druckspeicherung möglich.

Bei einem bevorzugten Verfahren wird, wie oben erwähnt, der Messwert zur Steuerung und/oder Regelung des eigentlichen Expansionsprozesses und insbesondere einer Kolbenbewegung zur Druckbeaufschlagung eingesetzt.

Die vorliegende Erfindung ist weiterhin auf eine Vorrichtung zum Befüllen und Expandieren von Kunststoffvorformlingen gerichtet, wobei die Vorrichtung eine Fülleinrichtung aufweist, welche die Kunststoffvorformlinge mit einem Füllgut befüllt und wenigstens zeitweise während der Befüllung zu Kunststoffbehältnissen und insbesondere Kunststoffflaschen expandiert. Dabei weist die Fülleinrichtung eine Messeinrichtung auf, welche dazu geeignet und bestimmt ist, wenigstens zeitweise einen Messwert zu bestimmen, der für einen in der Fülleinrichtung befindlichen Gasanteil charakteristisch ist.

Es wird daher auch vorrichtungsseitig vorgeschlagen, dass eine Messeinrichtung vorgesehen ist, welche wenigstens mittelbar eine Bestimmung des besagten Gasanteils erlaubt. Dabei kann es sich bei dieser Messeinrichtung bevorzugt um eine Druckmesseinrichtung handeln, welche zur Bestimmung eines Druckes geeignet und bestimmt ist.

Weiterhin weist bevorzugt die Vorrichtung eine Prozessoreinrichtung auf, welche dazu geeignet und bestimmt ist, aus wenigstens einem Druckmesswert einen für den in der Fülleinrichtung (einschließlich der Druckbeaufschlagungseinrichtung) befindlichen Gasanteil und insbesondere Luftanteil charakteristischen Messwert zu bestimmen.

Vorteilhaft weist die Vorrichtung eine Transporteinrichtung auf, insbesondere in Form eines drehbaren Blasrades, an dem bevorzugt eine Vielzahl von Umformungsstationen angeordnet ist. Vorteilhaft weisen diese Umformungsstationen jeweils Reckstangen auf, welche in die zu expandierenden und zu befüllenden Behältnisse einführbar sind, um die diese in der Längsrichtung zu dehnen. Weiterhin weisen diese Umformungsstationen bevorzugt jeweils Umformungsformen auf, innerhalb derer die Kunststoffvorformlinge zu den Kunststoffbehältnissen expandiert werden. Bei einer weiteren bevorzugten Ausführungsform weist wenigstens eine Umformungsstation und weisen bevorzugt die einzelnen Umformungsstationen wenigstens einen Druckaufnehmer bzw. eine Druckmesseinrichtung auf. Dieser Druckaufnehmer kann beispielsweise direkt an der Einfüllvorrichtung angeordnet sein, beispielsweise in einem Bereich, in dem die Einfülleinrichtung an eine Mündung der Kunststoffvorformlinge angelegt wird.

Bei einer weiteren vorteilhaften Ausführungsform weist die Vorrichtung wenigstens eine Steuerungseinrichtung auf, welche die Drucksteuerung auslöst. Bevorzugt weist die Vorrichtung wenigstens eine und bevorzugt eine Vielzahl von Druckbeaufschlagungseinrichtungen auf, welche das zum Expandieren der Behältnisse nötige flüssige Medium zur Verfügung stellen.

Bei einer weiteren bevorzugten Ausführungsform weist die Druckbeaufschlagungseinrichtung eine Kolbeneinrichtung auf, welche gegenüber einem Flüssigkeitsvolumen und insbesondere einem Füllgutvolumen bewegbar ist. Dabei kann auch eine Steuerungseinrichtung vorgesehen sein, welche diese Kolbenbewegung steuert. Bei einer weiteren vorteilhaften Ausführungsform weist die Vorrichtung eine Positionserfassungseinrichtung auf, welche eine Position dieser Kolbeneinrichtung bezüglich des Flüssigkeitsvolumens bestimmt. Bei einer weiteren vorteilhaften Ausführungsform weist die Vorrichtung eine Antriebseinrichtung zum Erzeugen der Bewegung der Kolbeneinrichtung auf.

Insbesondere handelt es sich hierbei um eine motorische und insbesondere um eine elektromotorische Antriebseinrichtung. Dabei kann bevorzugt auch eine Antriebs- und/oder Regelungseinrichtung für einen Motorstrom für diese Antriebseinrichtung vorgesehen sein.

Bei einer weiteren vorteilhaften Ausführungsform weist die Vorrichtung eine Entlüftungseinrichtung auf, um aus einem Füllweg für das Füllgut einen Gasanteil entweichen zu lassen. Dabei können auch mehrere Entlüftungsöffnungen vorgesehen sein, um an unterschiedlichen Bereichen des Füllweges eine Entlüftung zu ermöglichen.

Weitere Vorteile und Ausführungsformen ergeben sich aus den beigefügten Zeichnungen. Darin zeigen:

Fig. 1 eine schematische Darstellung einer erfindungsgemäßen Vorrichtung;

Fig. 2 eine Darstellung zur Veranschaulichung des der Erfindung zugrunde liegenden physikalischen Prinzips;

Fig. 3 eine weitere grob-schematische Darstellung einer erfindungsgemäßen Vorrichtung.

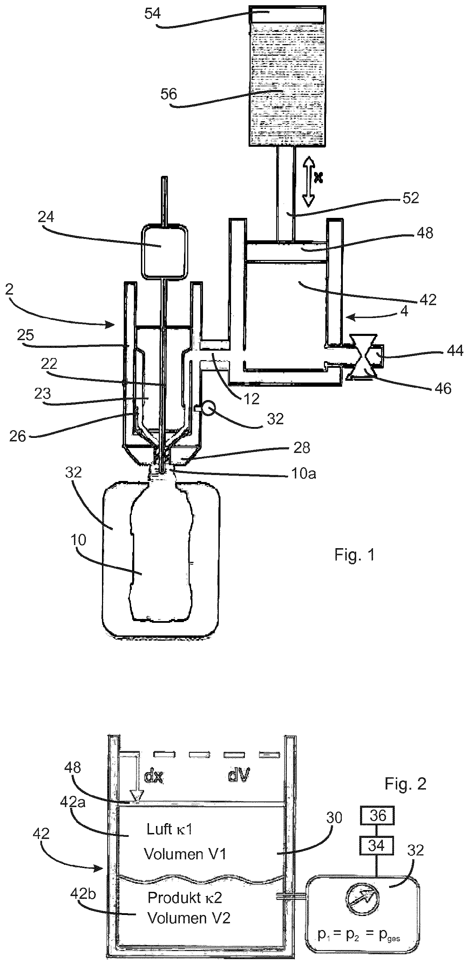

Figur 1 zeigt eine grob-schematische Darstellung einer erfindungsgemäßen Vorrichtung, genauer gesagt eine Umformungsstation, welche dazu dient, Kunststoffvorformlinge zu Kunststoffbehältnissen 10 und insbesondere Kunststoffflaschen 10 zu expandieren. Zu diesem Zweck weisen diese Füll- und Umformungsstationen (die oben auch als Fülleinrichtung bezeichnet wurden) 2 eine Druckbeaufschlagungseinrichtung 4 auf. Diese Druckbeaufschlagungseinrichtung 4 weist einen beweglichen Kolben 48 auf, der genauer bezüglich eines Aufnahmevolumens 42 beweglich ist, in welchem sich das abzufüllende Füllgut befindet. Das Bezugszeichen 54 kennzeichnet eine Antriebseinrichtung, um diese Kolbeneinrichtung 48 zu bewegen. Insbesondere handelt es sich dabei um eine elektromotorische Antriebseinrichtung, welche die Kolbeneinrichtung in der Richtung X bewegt.

Das Bezugszeichen 56 kennzeichnet eine Wegstrecken-Messeinrichtung, welche eine Position des Kolbens 48 innerhalb des Aufnahmevolumens 42 zumindest mittelbar bestimmt.

Über eine Zuführleitung 44 wird ein Füllgut in den Aufnahmeraum 42 eingeführt. Dabei ist ein Ventil 46 vorgesehen, welches geöffnet und geschlossen werden kann, um jeweils (beispielsweise bei einer Rückwärtsbewegung der Kolbeneinrichtung 48) Flüssigkeit und insbesondere Füllgut in den Aufnahmeraum 42 strömen zu lassen.

Über eine Verbindungsleitung 12 wird das Füllgut ausgehend von dem Aufnahmeraum in eigentliche Einfülleinheit transportiert. In der Einfülleinrichtung ist ein Aufnahmeraum 26 vorgesehen, der hier zwischen einem Schließkolben 23 und einer Umfangswandung 25 ausgebildet wird. Ausgehend von diesem Aufnahmeraum 26 strömt das Füllgut über eine Mündung 10a in den Kunststoffvorformling und bewirkt so auch die Expansion zu dem Kunststoffbehältnis 10. Das Bezugszeichen 28 kennzeichnet eine Anlageeinrichtung, welche an die Mündung 10a des Kunststoffvorformlings anlegbar ist und so die Flüssigkeit in diesen strömen zu lassen. Diese Anlageeinrichtung kann dabei als Fülldüse ausgeführt sein, welche insbesondere auch dichtend an dem Mündungsrand des Kunststoffvorformlings anliegt.

Das Bezugszeichen 22 kennzeichnet eine Reckstange, welche zum Dehnen des Kunststoffvorformlings in der Längsrichtung L dient. Zu diesem Zweck ist auch eine Antriebseinrichtung 24 vorgesehen, welche diese Bewegung der Reckstange 22 bewirkt.

Fig. 2 zeigt eine schematische Darstellung zur Veranschaulichung der physikalischen Prinzipien. Dabei ist wiederum ein Aufnahmeraum mit Flüssigkeit 42b und Luft 42a dargestellt. Innerhalb des Volumens 30 befindet sich ein Luftvolumen V1 und eine Produktvolumen V2. Die Luft weist dabei eine Kompressibilität $\kappa 1$ auf und das Produkt eine Kompressibilität $\kappa 2$.

Über einen Verfahrweg dX ergibt sich eine Volumendifferenz dV. Aus den oben genannten Formeln kann auf diese Weise rückgeschlossen werden auf das Volumen V1, dass sich aus den Kompressibilitäten $\kappa 1$ und $\kappa 2$ (welche bekannt sind), der Gesamtkompressibilität $\kappa_{ges}$ (welche durch Volumenänderung und Druckdifferenz bestimmt wird) und dem Gesamtvolumen ergibt. Das Bezugszeichen 32 bezieht sich auf eine Druckmesseinrichtung, welche hier den Gesamtdruck Pges misst, der gleich dem einzelnen Drücken p1 und p2 ist. Genauer gesagt misst die Druckmesseinrichtung 32 den Druck in unterschiedlichen Stellungen des Kolbens 48 und kann hieraus, wie oben erwähnt, eine Druckmesskurve ableiten.

Das Bezugszeichen 34 kennzeichnet eine Prozessoreinrichtung, welche auf Basis der gemessener Werte einen Luftanteil des abzufüllenden Mediums und/oder den Luftanteil der Flüssigkeit bestimmt. Das Bezugszeichen 36 kennzeichnet eine Steuerungseinrichtung, welche auf Basis dieses Luftanteils die Vorrichtung steuert und insbesondere die Antriebseinrichtung 54 (vgl. Fig. 1) steuert.

Daneben kann die Vorrichtung auch eine Ventileinrichtung (nicht gezeigt) aufweisen, welche eine Belüftung der Vorrichtung ermöglicht.

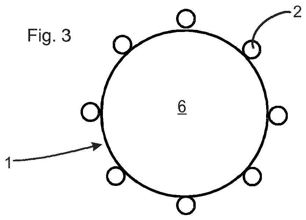

Fig. 3 zeigt eine grob-schematische Darstellung einer erfindungsgemäßen Vorrichtung 1 zum Expandieren und Umformen von Kunststoffvorformlingen. Dabei weist die Vorrichtung einen drehbaren Träger 6 auf, an dem eine Vielzahl von Füll- und Umformungseinrichtungen 2 angeordnet ist. Die Kunststoffvorformlinge können beispielsweise über einen (nicht gezeigten) Zuführstern zugeführt werden und über einen (ebenfalls nicht gezeigten) Abführstern können die umgeformten und befüllten Behältnisse aus der Anlage abgeführt werden.

Bezugszeichenliste

| 2 | (Ein)fülleinrichtung |
| 4 | Druckbeaufschlagungseinrichtung |
| 6 | Träger |
| 10 | Behältnis |
| 10a | Mündung |
| 12 | Verbindungsleitung |
| 22 | Reckstange |
| 23 | Schließkolben |
| 25 | Umfangswandung |
| 26 | Aufnahmeraum |
| 28 | Anlageeinrichtung |
| 30 | Volumen |
| 32 | Druckmesseinrichtung |
| 34 | Prozessoreinrichtung |
| 42 | Aufnahmevolumen |
| 44 | Zuführleitung |
| 46 | Ventil |
| 48 | Kolbeneinrichtung |
| 54 | Wegstrecken - Messeinrichtung |
| 56 | Antriebseinrichtung |
| X | Bewegungsrichtung der Kolbeneinrichtung |
| L | Längsrichtung des Behältnisses 10 |
| V1 | Luftvolumen |
| V2 | Produktvolumen |
| $\kappa 1$ | Kompressibilität der Luft |
| $\kappa 2$ | Kompressibilität des Produkts |
| dV | Volumendifferenz |
| p1 | Druck |
| p2 | Druck |

Patentansprüche

1. Verfahren zum Befüllen und Expandieren von Behältnissen mit den Schritten:

- Bereitstellung eines expandierbaren Behältnisses und insbesondere eines expandierbaren Kunststoffvorformlings;
- Befüllen des Behältnisses mit einem flüssigen Füllgut, wobei das Behältnis wenigstens zeitweise während dieses Befüllens expandiert wird und wobei das Befüllen mittels einer Fülleinrichtung (2) durchgeführt wird, welche an eine Mündung (10a) des zu befüllenden und expandierenden Behältnisses angelegt wird,

**dadurch gekennzeichnet, dass**
wenigstens zeitweise ein Messwert gemessen wird, der für einen in der Fülleinrichtung (2) befindlichen Gasanteil charakteristisch ist, wobei sich über einen Verfahrweg dX eines Kolbens, der bezüglich eines Aufnahmevolumens beweglich ist, in welchem sich das abzufüllende Füllgut befindet, eine Volumendifferenz dV ergibt und aus der Formel

$$V_1 = \frac{K_2 - K_{ges}}{K_2 - K_1} \cdot V_{ges}$$

auf ein Volumen V1 rückgeschlossen wird, wobei $V_1$ ein Luftvolumen ist und

$V_{ges}$ das Gesamtvolumen, $K_1$ die Kompressibilität der Luft und $K_2$ die Kompressibilität des flüssigen Füllguts, welche bekannt sind und $K_{ges}$ die Gesamtkompressibilität, welche durch Volumenänderung und Druckdifferenz bestimmt wird, und wobei weiter eine Druckmesseinrichtung vorgesehen ist, welche einen Gesamtdruck Pges in unterschiedlichen Stellungen des Kolbens misst, woraus eine Druckmesskurve abgeleitet wird.

2.  Verfahren nach dem vorangegangenen Anspruch,
    **dadurch gekennzeichnet, dass**
    die Fülleinrichtung (2) und insbesondere eine Druckerzeugungseinrichtung (4) dieser Fülleinrichtung (2) unter Verwendung des Messwerts gesteuert wird.

3.  Verfahren nach wenigstens einem der vorangegangenen Ansprüche,
    **dadurch gekennzeichnet, dass**
    der Messwert in einem im Wesentlichen abgeschlossenen Volumenbereich (26, 30), der Fülleinrichtung (2) bestimmt wird.

4.  Verfahren nach wenigstens einem der vorangegangenen Ansprüche,
    **dadurch gekennzeichnet, dass**
    der Messwert ein Druckwert ist oder ein Messwert, der für einen Druckwert charakteristisch ist.

5.  Verfahren nach wenigstens einem der vorangegangenen Ansprüche,
    **dadurch gekennzeichnet, dass**
    der Messwert ein für eine Kompressibilität eines Mediums charakteristischer Wert ist und/oder aus dem Messwert ein für eine Kompressibilität des Mediums charakteristischer Wert bestimmt wird.

6.  Verfahren nach wenigstens einem der vorangegangenen Ansprüche,
    **dadurch gekennzeichnet, dass**
    das Behältnis entlang eines vorgegebenen Transportpfads transportiert wird und wenigstens zeitweise während dieses Transports expandiert und befüllt wird.

7.  Verfahren nach wenigstens einem der vorangegangenen Ansprüche,
    **dadurch gekennzeichnet, dass**
    das flüssige Medium mittels einer Druckerzeugungseinrichtung (4) dem Behältnis zugeführt wird.

8.  Verfahren nach wenigstens einem der vorangegangenen Ansprüche,
    **dadurch gekennzeichnet, dass**
    wenigstens zeitweise eine Druckdifferenz gemessen und/oder bestimmt wird.

9.  Verfahren nach wenigstens einem der vorangegangenen Ansprüche,
    **dadurch gekennzeichnet, dass**
    ein Volumen der abzufüllenden Flüssigkeit innerhalb eines vorgegebenen Raumabschnitts (26) bestimmt wird.

10. Verfahren nach wenigstens einem der vorangegangenen Ansprüche,
    **dadurch gekennzeichnet, dass**
    eine Referenzmessung durchgeführt wird.

11. Verfahren nach wenigstens einem der vorangegangenen Ansprüche,
    **dadurch gekennzeichnet, dass**
    wenigstens zeitweise eine Entlüftung der Fülleinrichtung vorgenommen wird.

12. Verfahren nach wenigstens einem der vorangegangenen Ansprüche,
    **dadurch gekennzeichnet, dass**
    eine Vielzahl von Messwerten aufgenommen wird.

13. Vorrichtung (1) zum Befüllen und Expandieren von Kunststoffvorformlingen, wobei die Vorrichtung (1) eine Fülleinrichtung (2) aufweist, welche die Kunststoffvorformlinge mit einem Füllgut befüllt und wenigstens zeitweise während der Befüllung zu den Kunststoffbehältnissen (10) expandiert,

    **dadurch gekennzeichnet, dass**
    die Fülleinrichtung eine Messeinrichtung (32) aufweist, welche dazu geeignet und bestimmt ist, wenigstens einen Messwert zu bestimmen, der für einen in der Fülleinrichtung (2) befindlichen Gasanteil charakteristisch ist, wobei sich über einen Verfahrweg dX eines Kolbens, der bezüglich eines Aufnahmevolumens beweglich ist, in welchem sich das abzufüllende Füllgut befindet, eine Volumendifferenz dV ergibt und aus der Formel $V_1 = \frac{K_2 - K_{ges}}{K_2 - K_1}$ . $V_{ges}$ auf ein Volumen V1 rückschließbar ist, wobei $V_1$ ein Luftvolumen ist und $V_{ges}$ das Gesamtvolumen, $\underline{K}_1$ die Kompressibilität der Luft und $K_2$ die Kompressibilität des flüssigen Füllguts, welche bekannt sind und $K_{ges}$ die Gesamtkompressibilität, welche durch Volumenänderung und Druckdifferenz bestimmt wird, und wobei weiter eine Druckmesseinrichtung vorgesehen ist, mittels welcher ein Gesamtdruck Pges in unterschiedlichen Stellungen des Kolbens messbar ist, woraus eine Druckmesskurve ableitbar ist.

14. Vorrichtung (1) nach dem vorangegangenen Anspruch,
**dadurch gekennzeichnet, dass**
die Vorrichtung (1) eine Prozessoreinrichtung (34) aufweist, welche dazu geeignet und bestimmt ist, aus wenigstens einem Druckmesswert den für den in der Fülleinrichtung befindlichen Gasanteil zu bestimmen.

15. Vorrichtung (1) nach wenigstens einem der vorangegangenen Ansprüche 13 und 14, **dadurch gekennzeichnet, dass**
die Vorrichtung (1) eine Steuerungseinrichtung (36) aufweist, welche die Fülleinrichtung (2) und insbesondere die Druckbeaufschlagungseinrichtung (4) unter Berücksichtigung des Messwerts steuert.

**Claims**

1. Method for filling and expanding of containers comprising the following steps:

   - Providing an expandable container and particularly an expandable plastic preform;
   - Filling of the container with a liquid product, wherein the container at least at times during this filling is being expanded and wherein the filling is performed by means of a filling device (2) which is placed against the mouth (10a) of the container to be filled and expanded,

   **characterized in that**
   at least at times a measured value is measured which is characteristic for a gas proportion being located in the filling device (2), wherein via a travel length dX of a piston, which is movable relative to a receiving volume, in which the product to be filled is located a volume difference dV emerges and from the formula $V_1 = \frac{K_2 - K_{ges}}{K_2 - K_1} \cdot V_{ges}$ the volume $V_1$ can be deduced, wherein $V_1$ is an air volume and $V_{ges}$ the total volume, $K_1$ the compressibility of air and $K_2$ the compressibility of the liquid product, which are known and $K_{ges}$ the total compressibility, which is determined by change in volume and difference in pressure and wherein further a pressure measuring device is provided, which measures the total pressure $P_{ges}$ in various positions of the piston and hereof a pressure measuring curve is deduced.

2. Method according to the preceding claim, **characterized in that**
the filling device (2) and particularly a pressure generating device (4) of this filling device (2) is controlled by using the measured value.

3. Method according to at least one of the preceding claims,
**characterized in that**
the measured value is determined in a substantially enclosed volume area (26, 30) of the filling device (2).

4. Method according to at least one of the preceding claims,
**characterized in that**
the measured value is a pressure value or a measured value which is characteristic for a pressure value.

5. Method according to at least one of the preceding claims,
**characterized in that**
the measured value is a value which is characteristic for a compressibility of a medium and/or from the measured value a value is determined which is characteristic for a compressibility of the medium.

6. Method according to at least one of the preceding claims,
**characterized in that**
the container is transported along a predetermined transport path and at least at times during this transport it is expanded and filled.

7. Method according to at least one of the preceding claims,
**characterized in that**
the liquid medium is supplied to the container by means of a pressure generating device (4).

8. Method according to at least one of the preceding claims,
**characterized in that**
at least at times a pressure difference is measured and/or determined.

9. Method according to at least one of the preceding claims,
**characterized in that**
a volume of the liquid to be filled is determined inside a predetermined area (26).

10. Method according to at least one of the preceding claims,
**characterized in that**
a reference measuring is carried out.

11. Method according to at least one of the preceding claims,
**characterized in that**
at least at times a ventilation of the filling device is carried out.

12. Method according to at least one of the preceding claims,
**characterized in that**
a plurality of measured values is recorded.

13. Apparatus (1) for filling and expanding plastic preforms, wherein the apparatus (1) comprises a filling device (2) which fills the plastic preforms with a product and expands them into plastic containers (10) at least at times during the filling,
**characterized in that**
the filling device comprises a measuring device (32) which is suitable and intended to determine at least one measured value that is characteristic for a gas proportion being located in the filling device (2), wherein via a travel length dX of a piston, which is movable relative to a receiving volume, in which the product to be filled is located a volume difference dV

$$V_1 = \frac{K_2 - K_{ges}}{K_2 - K_1} \cdot V_{ges}$$

emerges and from the formula the volume $V_1$ is deducable, wherein $V_1$ is an air volume and $V_{ges}$ the total volume, $K_1$ the compressibility of air and $K_2$ the compressibility of the liquid product, which are known and $K_{ges}$ the total compressibility, which is determined by change in volume and difference in pressure and wherein further a pressure measuring device is provided, by means of which the total pressure $P_{ges}$ in various positions of the piston is measureable and hereof a pressure measuring curve is deducable.

14. Apparatus (1) according to the preceding claim,
**characterized in that**
the apparatus (1) has a processor device (34) which is suitable and intended to determine from at least one pressure value the gas proportion being located in the filling device.

15. Apparatus (1) according to at least one of the preceding claims 13 and 14,
**characterized in that**
the apparatus (1) has a control device (36) which controls the filling device (2) and particularly the pressure application device (4) in consideration of the measured value.

**Revendications**

1. Procédé pour remplir et élargir des récipients avec les étapes suivantes :

   - fourniture d'un récipient pouvant être élargi et en particulier d'une préforme en plastique pouvant être élargie ;
   - remplissage du récipient avec un produit de remplissage liquide, dans lequel le récipient est élargi au moins par intermittence pendant ce remplissage et dans lequel le remplissage est effectué au moyen d'un système de remplissage (2), lequel est placé sur une embouchure (10a) du récipient à remplir et à élargir,

**caractérisé en ce que**
une valeur de mesure est mesurée au moins par intermittence, qui est caractéristique d'un pourcentage de gaz se trouvant dans le système de remplissage (2), dans lequel une différence de volume dV est obtenue sur une voie de déplacement dX d'un piston, qui est mobile par rapport à un volume de réception dans lequel se trouve le produit de remplissage à verser et un volume V1 est déduit de la

$$V_1 = \frac{K_2 - K_{ges}}{K_2 - K_1} \cdot V_{ges}$$

formule , dans lequel $V_1$ est un volume d'air et $V_{ges}$ le volume total, $K_1$ la compressibilité de l'air et $K_2$ la compressibilité du produit de remplissage liquide, lesquels sont connus et $K_{ges}$ la compressibilité totale, laquelle est déterminée par la modification du volume et la différence de pression, et dans lequel un système de mesure de pression est prévu en outre, lequel mesure une pression totale $P_{ges}$ dans différentes positions du piston, de laquelle une courbe de mesure de pression est dérivée.

2. Procédé selon la revendication précédente,
**caractérisé en ce que**
le système de remplissage (2) et en particulier un système de génération de pression (4) de ce système de remplissage (2) est commandé au moyen de la valeur de mesure.

3. Procédé selon au moins l'une des revendications précédentes,
**caractérisé en ce que**
la valeur de mesure est déterminée dans une plage de volumes (26, 30) sensiblement fermée du système de remplissage (2).

4. Procédé selon au moins l'une des revendications précédentes,
**caractérisé en ce que**
la valeur de mesure est une valeur de pression ou une valeur de mesure qui est caractéristique d'une valeur de pression.

5. Procédé selon au moins l'une des revendications précédentes,
**caractérisé en ce que**
la valeur de mesure est une valeur caractéristique d'une compressibilité d'un milieu et/ou une valeur caractéristique d'une compressibilité du milieu est déterminée à partir de la valeur de mesure.

**6.** Procédé selon au moins l'une des revendications précédentes,
**caractérisé en ce que**
le récipient est transporté le long d'un trajet de transport prédéfini et est élargi et rempli au moins par intermittence pendant ce transport.

**7.** Procédé selon au moins l'une des revendications précédentes,
**caractérisé en ce que**
le milieu liquide est amené au récipient au moyen d'un système de génération de pression (4).

**8.** Procédé selon au moins l'une des revendications précédentes,
**caractérisé en ce que**
une différence de pression est mesurée et/ou déterminée au moins par intermittence.

**9.** Procédé selon au moins l'une des revendications précédentes,
**caractérisé en ce que**
un volume du liquide à verser à l'intérieur d'une partie d'espace (26) prédéfinie est déterminé.

**10.** Procédé selon au moins l'une des revendications précédentes,
**caractérisé en ce que**
une mesure de référence est effectuée.

**11.** Procédé selon au moins l'une des revendications précédentes,
**caractérisé en ce que**
une ventilation du système de remplissage est réalisée au moins par intermittence.

**12.** Procédé selon au moins l'une des revendications précédentes,
**caractérisé en ce que**
une pluralité de valeurs de mesure est enregistrée.

**13.** Dispositif (1) de remplissage et d'élargissement de préformes en plastique, dans lequel le dispositif (1) présente un système de remplissage (2), lequel remplit les préformes en plastique avec un produit de remplissage et les élargit en les récipients en plastique (10) au moins par intermittence pendant le remplissage,
**caractérisé en ce que**
le système de remplissage présente un système de mesure (32), lequel est adapté et destiné à déterminer au moins une valeur de mesure, qui est caractéristique d'un pourcentage de gaz se trouvant dans le système de remplissage (2), dans lequel une différence de volume dV est obtenue sur une voie de déplacement dX d'un piston, qui est mobile par rapport à un volume de réception dans lequel se trouve le produit de remplissage à verser et un volume V1 est déduit de la formule $V_1 = \frac{K_2 - K_{ges}}{K_2 - K_1} \cdot V_{ges}$ ,

dans lequel $V_1$ est un volume d'air et $V_{ges}$ le volume total, $K_1$ la compressibilité de l'air et $K_2$ la compressibilité du produit de remplissage liquide, lesquels sont connus et $K_{ges}$ la compressibilité totale, laquelle est déterminée par la modification du volume et la différence de pression, et dans lequel un système de mesure de pression est prévu en outre, au moyen duquel une pression totale $P_{ges}$ dans différentes positions du piston peut être mesurée, de laquelle une courbe de mesure de pression peut être dérivée.

**14.** Dispositif (1) selon la revendication précédente,
**caractérisé en ce que**
le dispositif (1) présente un système de processeur (34), lequel est adapté pour et destiné à déterminer le pourcentage de gaz se trouvant dans le système de remplissage à partir d'au moins une valeur de mesure de pression.

**15.** Dispositif (1) selon au moins l'une des revendications précédentes 13 et 14,
**caractérisé en ce que**
le dispositif (1) présente un système de commande (36), lequel commande le système de remplissage (2) et en particulier le système de sollicitation avec une pression (4) avec prise en compte de la valeur de mesure.

54

56

24

2

25

22

23

26

32

10

52

48

42

4

44

46

12

32

28

10a

Fig. 1

48

42a

42

42b

dx

dV

Luft κ1
Volumen V1

Produkt κ2
Volumen V2

30

36

34

32

$p_1 = p_2 = p_{ges}$

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2016144550 A1
- US 2011135778 A1